# EUROPEAN PATENT APPLICATION

(11) **EP 2 053 503 A1**
(43) Date of publication of application: **29.04.2009**
(21) Application number: 07020604.0
(22) Date of filing: 22.10.2007
(51) Int. Cl.: G06F 9/445

(54) **Module for deployment of software components via cabinet files**

(71) Applicant: SIEMENS AKTIENGESELLSCHAFT, 80333 München (DE)
(72) Inventor: Fioritoni, Marco, 16145 Genova (IT); Camera, Fabrizio, 15069 Serravalle Scivia (IT); Borriello, Diego, 16040 Cogorno (IT)
(74) Representative: Fischer, Michael

(57) **Abstract**

Module for deployment of application components contained in cabinet files (1.cab, 2.cab, 3.cab,...) from a server to a client device, comprising
- at least one standalone set of information about dependencies of at least one cabinet file on logically adjacent cabinet files
- a deployment means such that uniquely the at least one standalone set of information is used by said deployment means to deploy the cabinet files in a logically correct order.

## Description

The invention relates to the deployment of software components via cabinet files, especially for Web applications, macro-programming and development tool chains, whereby the term deployment refers to the distribution of software components to users.

Web-based applications sometimes need a variety of software components in order to run, which are not present on the device the web-based application is located. Thus, these software components need to be downloaded from the internet and installed on the device. Present solutions based on Microsoft technologies use cabinet files (.cab) containing software components needed by the web-based application in order to run. These software components, such as a Microsoft ActiveX Controls (.ocx), dynamic link libraries (.dll), executables (.exe), Java class files or applets are usually dependent on each other. Furthermore, the cabinet files contain specialized information about versions, location and dependencies of included software components.
This specialized information is also used for download of required third party modules and/or for controlling deployment of very large software components, for example development tool chains, in a way that these components are split over several .cab files which are downloaded sequentially. Furthermore, the specialized information contains references about type of the cabinet file, thus making it possible for a client device to identify the said cabinet file as being of type "software distribution unit". The location of the specialized information is in the cabinet file itself, thus making it necessary to modify the said cabinet file when new versions of contained software components are available for update.
Hence, if more than one cabinet files is required for the deployment of a software module, all cabinet files comprising the software module have to be updated in order to restore their mutual compatibilities. This fact generates a high development and management complexity, especially in environments where several modules are developed by different groups and deployed in a collective package. Taking as an example the update of one single software module, the deployment section has to update the entire package to be distributed.
Furthermore, in case one cabinet file comprises more than one software module, a major drawback is the fact that all contained software modules are required to have the same version. Another consequence of the cabinet file structure mentioned above is that development groups have to align very tightly in order to agree upon consistency of module versions for each cabinet file to be deployed.
In many cases the download sequence of software components plays a key role in the functionality of the distribution unit as a whole. If these download dependencies change, for example as a result of changing development requirements, the entire chain of cabinet files used for deployment has to be changed and retested as well.
Furthermore, in some cases there are security aspects to be taken into account, such as the development of modules which are intended only for deployment to certain locations. As the technical and technological base of the above described method of deploying data via cabinet files is known by specialists, it is very easy to retrieve sensitive data or modules by unauthorized parties. The facts presented in the above paragraphs render the state of the art methods error-prone regarding the development and deployment process, highly time-consuming and hazardous in terms of security.

One goal to be achieved is to be seen in providing means as well methods for simplifying the deployment process of software components.

One way the goal is achieved by the present invention lies in providing a module for deployment of application components contained in cabinet files from a server to a client device comprising
- at least one standalone set of information about dependencies of at least one cabinet file on logically adjacent cabinet files
- a deployment means such that uniquely the at least one standalone set of information is used by said deployment means to deploy the cabinet files in a logically correct order.

One advantage over state of the art solutions is that the standalone set of information is decoupled from the cabinet file itself, thus avoiding the use of specialized cabinet file reading/writing means in order to extract a deployment package. From the deploying entity's point of view, one major advantage is the significant reduction of technical and management effort in case changes have to be applied to the deployment package, insofar as changes do not affect the deployment entities themselves and no testing of version compliance between the cabinet file elements has to be carried out. Furthermore, the deployment means can be adapted to a variety of client device applications for download management.

Further goals to be achieved are to be seen in the shortage of time-to-market, meaning that the entire deployment process of developed software components using the present invention can take place in a shorter time than using state of the art solutions, in providing security means in order to protect the deployed data from fraudulent elements and in ensuring error-free deployment packages.

The following examples and drawings depict the present solution, which is then further explained, whereby:

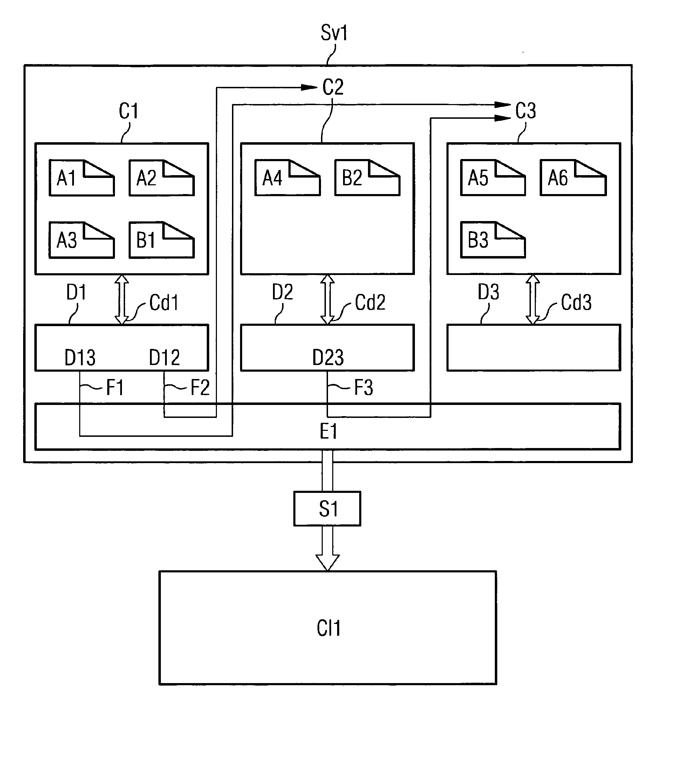

Drawing 1 shows an example of deployment of three cabinet files C1, C2 and C3 to a client device C11.
Drawing 1 depicts the process of providing deployment information for three cabinet files C1, C2 and C3 residing on a server Sv1 to a client device C11 using a deployment means E1. C1, C2 and C3 are associated with three standalone sets of information D1, D2 and D3 respectively and the deployment means E1 is responsible for the correct deployment sequence of C1, C2 and C3. Cd1, Cd2 and Cd3 depict the associations of C1 with D1, C2 with D2 and C3 with D3 respectively. These associations are done in a user-defined manner. D1 contains deployment data D13, which represents the dependency of C1 upon C3 and deployment data D12 which represents the dependency of C1 upon C2. D2 contains deployment data D23, which represents the dependency of C2 upon C3. D3 contains no deployment data because in this example there are no further cabinet files to be deployed. The cabinet file C1 contains three elements A1, A2 and A3 and a modified ActiveX element B1. The cabinet file C2 contains one element A4 and a modified ActiveX element B2. The cabinet file C3 contains two elements A5 and A6 and a modified ActiveX element B3. The arrows F1 and F2 depict the retrieval of deployment data D13 and D12 characterizing C1. The arrow F3 depicts the retrieval of deployment data D23 characterizing the cabinet file C2. For the cabinet file C3 no deployment data is needed. The deployment means E1 interprets the standalone sets of information D1, D2 and D3 for each cabinet file C1, C2 and C3 respectively, in order to provide an ordered list of instructions S1, which is then used by the client device C11 to retrieve version and download information needed for a correct and complete download of all necessary cabinet files C1, C2 and C3.

The present invention relates to providing a module for deployment of application components contained in cabinet files (C1, C2, C3,...) from a server (Sv1) to a client device (C11), comprising
- at least one standalone set of information (D1) about dependencies (D13, D12,...) of at least one cabinet file (C1) on logically adjacent cabinet files
- a deployment means (E1) such that uniquely the at least one standalone set of information (D1) is used by said deployment means to deploy the cabinet files in a logically correct order.

One advantage over state of the art solutions is that the standalone set of information (D1) is decoupled from the cabinet file itself, thus avoiding the use of specialized cabinet file reading/writing means in order to extract a deployment package. From the deploying entity's point of view, one major advantage is the significant reduction of technical and management effort in case changes have to be applied to the deployment package, insofar as changes do not affect the deployment entities themselves and no testing of version compliance between the cabinet file elements has to be carried out. Furthermore, the deployment means can be adapted to a variety of client device applications for download management.

According to a preferred embodiment, the at least one standalone set of information (D1) is contained in a file. This advantageously allows the cabinet files and standalone sets of information to reside in the same environment, for example one deployment server.

According to a preferred embodiment, the file has a user-defined format. One advantage is that, depending on user needs, the file format can be freely chosen. A further advantage is the ability to simplify the file format as to be for example a text file which is easy to read, create and alter. Yet another advantage is the ability to create custom file formats to be used only by designated parties. This is one step in insuring a high, customizable level of security for example by agreeing on the usage of encrypted files.

According to a preferred embodiment, the at least one standalone set of information (D1) further contains version information concerning application components. One advantage is that the version information is stored centrally in the standalone set of information (D1), outside of the cabinet file (C1) and thus can be modified without having to check internal cabinet file dependencies of the application modules in said cabinet file.

According to a preferred embodiment, the deployment means (E1) comprises software code. This advantageously allows high customizability of a deployment procedure depending on server's and client device's requirements in terms of efficiency, processing speed, reusability and security.

According to a preferred embodiment, the deployment means (E1) builds a dependency tree based on the interpretation of the at least one standalone set of information (D1). The advantage is that, on the server's side, personnel involved in the deployment procedure can easily track the complexity of a deployment package and optimize the said deployment procedure.

According to a preferred embodiment, the dependency tree is used by the deployment means (E1) to create an ordered list of instructions (S1) for the client device (C11). Beside the advantage of using the dependency tree as a complexity tracking means mentioned above, another advantage lies in the reusability of the said dependency tree by the deployment means (E1) in order to generate download information for the client device (C11), thus reducing computational effort.

According to a preferred embodiment, the ordered list of instructions (S1) is part of an html-formatted document created by the deployment means (E1) and sent to the client device (C11). This advantageously allows the usage of the widespread html format and thus makes it easy for the current invention to be applied in existing systems with minor or no changes.

According to a preferred embodiment, the client device (C11) retrieves version and download information from the ordered list of instructions (S1) contained in the html-formatted document. As mentioned above, the client device (C11) is able to employ already implemented html software in order to retrieve the download information it needs for a successful download.

According to a preferred embodiment, the client device (Cl1) uses specialized software code in order to interpret the ordered list of instructions (S1). This advantageously allows, together with the software code of the deployment means, to develop highly customized solutions of download procedures, especially in terms of security, when sensitive data has to be deployed to a limited number of client devices. This allows furthermore the fast development of a deployment procedure, especially when the size of the deployed packages is small and/or the contained modules are few.

According to a preferred embodiment, the at least one cabinet file (C1) comprises a modified ActiveX element (B1) containing a version information of the cabinet file (C1). This advantageously allows that one single version information be used for the cabinet file (C1) instead of needing to align the versions of all contained modules. This embodiment is specifically useful for deployment systems using standard download tools.

According to a preferred embodiment, the manner of association between the cabinet file (C1) and the standalone set of information (D1) is user-defined. This advantageously allows a high flexibility by loosely coupling (C1) and (D1), for example by descriptive names of both (C1) and (D1), meaning that the deployment means (E1) identifies by the loosely coupling of (C1) and (D1), which standalone set of information has to be matched to which cabinet file.

According to a preferred embodiment, the at least one standalone set of information (D1) is part of the cabinet file (C1). This advantageously allows the present invention to be equally usable in a standard cabinet file approach.

### List of Abbreviations

- A1: Component 1 of cabinet file 1
- A2: Component 2 of cabinet file 1
- A3: Component 3 of cabinet file 1
- A4: Component 1 of cabinet file 2
- A5: Component 1 of cabinet file 3
- A6: Component 2 of cabinet file 3
- B1: Modified ActiveX element of cabinet file 1
- B2: Modified ActiveX element of cabinet file 2
- B3: Modified ActiveX element of cabinet file 3
- C1: Cabinet file 1
- C2: Cabinet file 2
- C3: Cabinet file 3
- D1: Standalone set of information 1
- D12: Dependency information 1
- D13: Dependency information 2
- D2: Standalone set of information 2
- D23: Dependency information 3
- D3: Standalone set of information 3
- E1: Deployment means
- Cd1: Association between cabinet file 1 and standalone set of information 1
- Cd2: Association between cabinet file 2 and standalone set of information 2
- Cd3: Association between cabinet file 3 and standalone set of information 3
- F1: Dependency of cabinet file 1 to cabinet file 3
- F2: Dependency of cabinet file 1 to cabinet file 2
- F3: Dependency of cabinet file 3 to cabinet file 3
- C11: Client device
- S1: Ordered list of instructions
- Sv1: Server

## Claims

1. Module for deployment of application components contained in cabinet files (C1, C2, C3,...) from a server (Sv1) to a client device (C11), comprising
- at least one standalone set of information (D1) about dependencies (D13, D12,...) of at least one cabinet file (C1) on logically adjacent cabinet files
- a deployment means (E1) such that uniquely the at least one standalone set of information (D1) is used by said deployment means (E1) to deploy the cabinet files in a logically correct order.

2. Module according to claim 1, whereby the at least one standalone set of information (D1) is contained in a file.

3. Module according to claim 1 or 2, whereby the file has a used-defined format.

4. Module according to one of the preceding claims, whereby the at least one standalone set of information (D1) further contains version information concerning application components.

5. Module according to one of the preceding claims, whereby the deployment means (E1) comprises software code.

6. Module according to one of the preceding claims, whereby the deployment means (E1) builds a dependency tree based on the interpretation of the at least one standalone set of information (D1).

7. Module according to claim 6, whereby the dependency tree is used by the deployment means (E1) to create an ordered list of instructions (S1) for the client device (C11).

8. Module according to claim 7, whereby the ordered list of instructions (S1) is part of an html-formatted document created by the deployment means (E1) and sent to the client device (C11).

9. Module according to claim 8, whereby the client device (C11) retrieves version and download information from the ordered list of instructions (S1) contained in the html-formatted document.

10. Module according to one of the claims 7 to 9, whereby the client device (C11) uses specialized software code in order to interpret the ordered list of instructions (S1).

11. Module according to one of the preceding claims, whereby the at least one cabinet file (C1) comprises a modified ActiveX element (B1) containing a version information of the cabinet file (C1).

12. Module according to one of the preceding claims, whereby the manner of association between the cabinet file (C1) and the standalone set of information (D1) is user-defined.

13. Module according to one of the preceding claims, whereby the at least one standalone set of information (D1) is part of the cabinet file (C1).
